# FASCICULE DE BREVET EUROPEEN

(11) **EP 2 273 774 B1**
(45) Date de publication et mention de la délivrance du brevet: **22.08.2012**
(21) Numéro de dépôt: 10164961.4
(22) Date de dépôt: 04.06.2010
(51) Int. Cl.: H04M 3/42, H04M 3/533, H04M 1/00

(54) **Procédé de notification d'une demande d'établissement d'appel**
Verbindungswunschbenachrichtigungsverfahren
Call setup request notification method

(30) Priorité: 25.06.2009 FR 0954329
(43) Date de publication de la demande: 12.01.2011
(73) Titulaire: France Telecom, 75015 Paris (FR)
(72) Inventeur: Pieto, Loïc, 22300 Rospez (FR); Poppleton, Marc, 22140 Tonquedec (FR); Godest, Jean-Pierre, 22300 Lannion (FR)

(56) Documents cités:
- US-A- 4 926 470
- US-A- 5 475 737
- US-A- 5 930 338

## Description

La présente invention se rapporte de manière générale au domaine des télécommunications, et plus précisément à un procédé de notification d'un appel entrant.

Lorsqu'un utilisateur reçoit un appel entrant sur un terminal téléphonique, celui-ci le notifie, le plus souvent de façon visuelle et sonore, ou par vibrations. Lors de cette notification, l'utilisateur a la possibilité de prendre l'appel en décrochant, à tout moment avant le renvoi de l'appel sur un répondeur local par le terminal, ou sur un serveur de messagerie vocale distant par un réseau de communication auquel est connecté le terminal.

Lorsque l'appel est renvoyé sur un répondeur local, c'est-à-dire un répondeur vocal connecté au terminal chez l'utilisateur, le renvoi est effectué par décrochage automatique du terminal au bout d'une durée prédéterminée correspondant par exemple à trois sonneries de notification. Cette durée est configurable par l'utilisateur sur son terminal, de manière statique c'est-à-dire avant qu'un appel entrant ne survienne. Ce type de renvoi d'appel n'est donc pas ergonomique pour l'utilisateur, car il ne peut allonger la durée de notification avant de prendre l'appel s'il est occupé, sans avoir au préalable configuré une durée d'attente importante avant le renvoi d'un appel sur son répondeur. Or une telle configuration, dans les cas où l'utilisateur ne peut prendre l'appel, est déplaisante pour l'appelant puisque celui-ci est alors dans l'obligation d'attendre longtemps avant de pouvoir laisser un message à l'utilisateur.

De même, lorsque l'appel est renvoyé sur un serveur de messagerie vocale distant, ce qui correspond au cas où ni l'utilisateur ni le terminal n'ont décroché pendant la phase de notification de l'appel entrant, le renvoi est effectué automatiquement au bout d'une durée prédéterminée, dont la valeur maximale est fixée généralement à une minute dans le réseau de communication. La valeur par défaut de cette durée est généralement moins importante, par exemple de vingt secondes, et est modifiable par l'utilisateur au moyen d'une interface de configuration accessible par exemple au moyen d'un site web de l'opérateur du réseau de communication. Dans le cas d'un renvoi sur un serveur de messagerie vocale, l'utilisateur ne peut donc modifier la durée d'attente de l'appelant de manière dynamique avant que l'appelant ne soit renvoyé sur messagerie vocale.

Le document US 5 930 338 A décrit un dispositif programmable de gestion d'appels personnels entrants installé dans les locaux d'un utilisateur présentant ces inconvénients.

Un des buts de l'invention est de remédier à au moins une partie des inconvénients de la technique antérieure, en fournissant un procédé et un terminal permettant de modifier de manière dynamique un instant auquel un appelant est renvoyé vers une messagerie vocale distante.

A cette fin, l'invention propose un procédé de notification d'une demande d'établissement d'appel entrant sur un terminal, comportant une étape de notification de ladite demande, **caractérisé en ce qu**'il comporte en outre:
- une étape de réception d'une donnée destinée à modifier un instant prédéterminé de renvoi dudit appel entrant vers un serveur,
- et une étape de temporisation, en fonction de ladite donnée, d'une étape d'émission d'un message de refus de ladite demande.

Grâce à l'invention, un utilisateur étant notifié d'un appel entrant, a la possibilité de retarder le renvoi de cet appel entrant sur une messagerie vocale dans un réseau de communication. Il utilise par exemple pour cela une interface graphique sur son terminal, lui permettant de réduire ou d'augmenter le nombre de sonneries avant renvoi sur cette messagerie, par rapport à un nombre de sonneries prédéterminé. Au bout du nombre de sonneries choisi dynamiquement par l'utilisateur, le terminal envoie dans le réseau de communication un message de refus de la demande d'établissement d'appel, déclenchant le renvoi de l'appelant sur la messagerie vocale dans le réseau. Ce message de refus correspond à un message de raccrochage, à la différence près que dans l'invention la communication n'a pas été établie entre l'appelant et l'appelé avant que ce message de raccrochage ne soit envoyé au réseau de communication.

Il est à noter que les terminaux mobiles ont généralement une touche spécifique permettant de raccrocher sans avoir décroché. L'appui sur cette touche lors de la notification d'un appel entrant déclenche généralement le renvoi de cet appel sur une messagerie vocale distante. Ainsi, un autre avantage du procédé de notification selon l'invention est qu'il ne nécessite pas la modification des serveurs d'application dans les réseaux mobiles pour les utilisateurs de terminaux mobiles.

De plus, l'invention n'est pas limitée au service de répondeur téléphonique: en effet le procédé de notification selon l'invention permet plus généralement à un utilisateur de modifier l'instant auquel est déclenché habituellement un service sur non réponse à un appel entrant dans le réseau de communication auquel il est connecté. Ce service est en général une messagerie vocale, mais d'autres services sont envisageables, par exemple l'envoi d'une publicité vidéo à l'appelant, sans possibilité pour celui-ci de laisser un message à l'utilisateur. Le serveur vers lequel est renvoyé l'appel entrant dans l'invention n'est donc pas limité à un serveur de messagerie vocale. Selon le service déclenché par le message de refus envoyé par le terminal de l'utilisateur, ce serveur est par exemple un serveur de ressources multimédia, ou un autre terminal.

Avantageusement, ladite donnée correspond:
- à un nombre de sonneries additionnelles par rapport à un nombre prédéterminé de sonneries,
- ou à une durée de temporisation en secondes par rapport à une durée prédéterminée.

Ce codage de la donnée destinée à modifier l'instant de renvoi d'appel a l'avantage d'être intuitif pour l'utilisateur.

Avantageusement, ledit message de refus déclenche la diffusion d'un message vocal différent d'un message vocal diffusé par défaut lorsque ledit procédé de notification n'est pas utilisé.

Le déclenchement du renvoi sur la messagerie dans le réseau de communication de l'utilisateur étant lié à la réception d'un message de refus de la demande d'établissement d'appel entrant, plutôt qu'à l'expiration d'une temporisation dans le réseau de communication, il est possible de jouer un message vocal différent à l'appelant dans chacun de ces cas de renvoi. Cela permet par exemple de notifier l'appelant que l'utilisateur est chez lui mais indisponible.

L'invention concerne aussi un terminal téléphonique comportant des moyens de notification d'une demande d'établissement d'appel entrant, **caractérisé en ce qu**'il comporte en outre:
- des moyens de réception d'une donnée destinée à modifier un instant prédéterminé de renvoi dudit appel entrant vers un serveur,
- et des moyens de temporisation d'une émission d'un message de refus de ladite demande en fonction de ladite donnée reçue par lesdits moyens de réception.

L'invention concerne également un programme d'ordinateur comportant des instructions pour mettre en oeuvre le procédé selon l'invention, lorsqu'il est exécuté sur un processeur.

Le terminal selon l'invention ainsi que le programme d'ordinateur présentent des avantages analogues à ceux du procédé de notification selon l'invention.

D'autres caractéristiques et avantages apparaîtront à la lecture d'un mode de réalisation préféré décrit en référence aux figures dans lesquelles:
- la figure 1 représente un réseau de communication auquel est connecté un terminal selon l'invention,
- la figure 2 représente des étapes du procédé de notification selon l'invention,
- la figure 3 représente une interface graphique sur un écran du terminal selon l'invention dans ce mode de réalisation de l'invention,
- et la figure 4 représente un diagramme de flux illustrant une utilisation du procédé de notification selon l'invention.

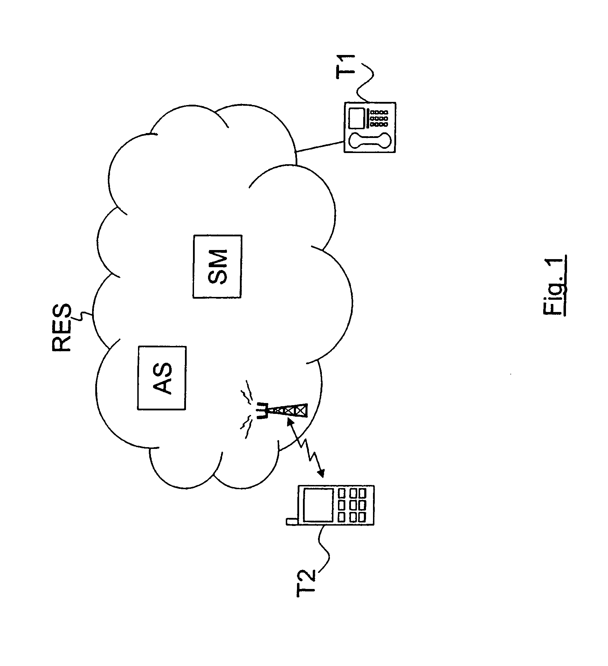

Selon un mode de réalisation préféré de l'invention représenté à la **figure 1****,** l'invention est implémentée de manière logicielle dans un terminal mobile T2, connecté à un réseau de communication RES. Le terminal mobile T2 n'est pas localement connecté à un répondeur vocal, l'utilisateur du terminal T2 ayant uniquement une messagerie vocale distante.

Le réseau de communication RES implémenté selon une architecture IMS (d'après l'anglais "Internet Protocol Multimedia Subsystem") comporte un réseau coeur interconnecté à différents réseaux d'accès, par exemple un réseau d'accès UMTS (d'après l'anglais "Universal Mobile Telecommunications System") auquel est connecté le terminal T2, mais aussi un réseau d'accès fixe tel que la boucle locale du réseau RTC (Réseau Téléphonique Commuté) auquel est connecté un téléphone T1 sur IP. Le réseau RES comporte de plus:
- un serveur d'application AS implémentant un service de répondeur téléphonique auquel est abonné l'utilisateur du terminal mobile T2,
- et un serveur de messagerie SM.

Il est à noter que dans ce mode de réalisation de l'invention, le terminal T2 est un terminal mobile supportant le protocole SIP (d'après l'anglais "Session Initiation Protocol"), mais l'invention est également implémentable dans un téléphone fixe utilisant le protocole V.23 pour se connecter à un réseau RTC, ou dans tout autre type de téléphone apte à notifier son utilisateur d'un appel entrant en provenance d'un réseau de communication.

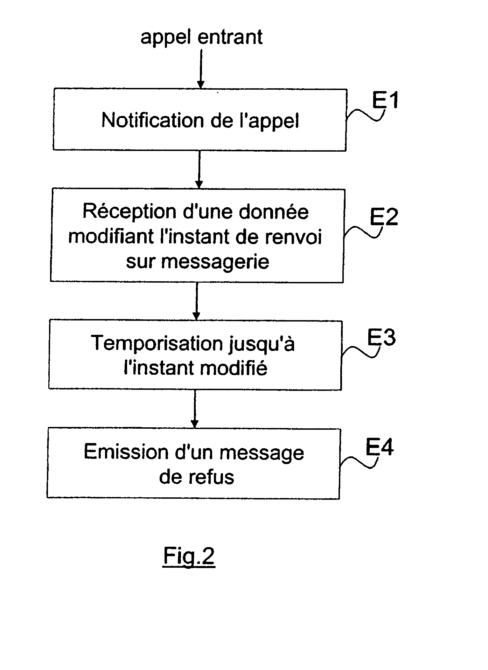

En référence à la **figure 2****,** le procédé de notification selon l'invention est représenté sous la forme d'un algorithme comportant des étapes E1 à E4. Préalablement à la mise en oeuvre du procédé selon l'invention, le terminal T2 reçoit un appel entrant, ou plus précisément une demande d'établissement d'appel.

L'étape E1 est alors la notification de cet appel entrant à l'utilisateur du terminal T2. Cette notification est par exemple effectuée à l'aide de vibrations, ou de manière sonore, ou visuelle, ou une combinaison de ces possibilités.

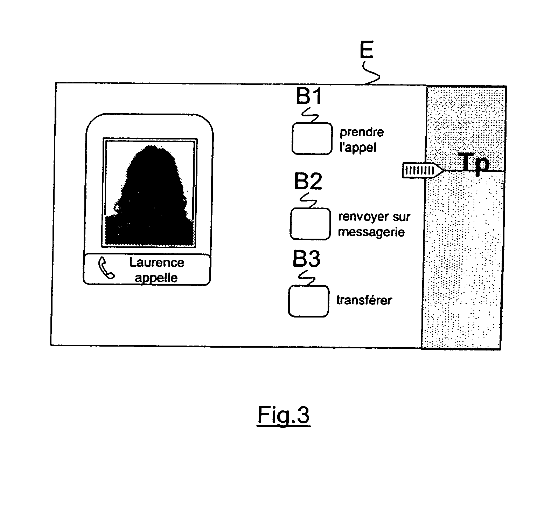

La **figure 3** représente l'écran E du terminal T2 lors de cette étape E1 de notification, dans ce mode de réalisation de l'invention. Le terminal T2 affiche à l'utilisateur, lorsque l'appel entrant est détecté par le terminal T2, une interface graphique notifiant l'utilisateur de cet appel entrant. Cette interface graphique présente à l'utilisateur des données liées à l'appelant lorsque celles-ci sont disponibles, ici la photographie et le nom de l'appelant, ce qui suppose que ces données sont inscrites dans le carnet d'adresses du terminal T2 et que l'appel entrant n'est pas masqué, c'est-à-dire que l'appelant n'a pas souscrit au service de non présentation de son numéro de téléphone.

De plus, cette interface graphique propose diverses options à l'utilisateur pour faire suite à cet appel entrant:
- Un bouton d'action B1 permet à l'utilisateur du terminal T2 de prendre l'appel entrant, c'est-à-dire de décrocher.
- Un bouton d'action B3 permet à l'utilisateur du terminal T2 de transférer l'appel entrant : par appui sur cette touche, une fenêtre graphique s'ouvre permettant d'entrer un numéro de téléphone ou une adresse SIP pour transférer l'appel, ou de choisir ce numéro ou cette adresse de transfert dans le carnet d'adresses du terminal T2.
- Enfin un bouton d'action B2 permet à l'utilisateur du terminal T2 de renvoyer l'appel entrant sur la messagerie vocale de l'utilisateur située dans le réseau RES. Un curseur permet à l'utilisateur d'avancer ou de retarder l'instant auquel l'appel sera renvoyé sur la messagerie vocale par rapport à un instant Tp de renvoi prédéterminé.

L'instant Tp de renvoi prédéterminé est par exemple fixé à 15 secondes après la réception de la demande d'établissement d'appel par le terminal T2. Cet instant Tp correspond à l'instant par défaut auquel le terminal T2 envoie un message de refus de la demande d'établissement d'appel au réseau de communication RES, sans action de l'utilisateur. Il est par exemple configurable par l'utilisateur sur le terminal T2, hors appel. En effet lors d'un appel entrant, si l'utilisateur souhaite changer l'instant de renvoi sur messagerie vocale, il utilise le curseur de l'interface graphique. L'activation de ce curseur modifie la temporisation d'envoi du message de refus par le terminal T2: en fonction du déplacement de ce curseur, le terminal T2 détermine une durée, par exemple en nombre de secondes ou de sonneries, à déduire de ou à ajouter à la durée de 15 secondes correspondant à l'instant Tp de renvoi prédéterminé, pour calculer une nouvelle durée de temporisation. Cette nouvelle durée de temporisation correspond à la durée devant s'écouler entre la réception de la demande d'établissement d'appel et l'envoi du message de refus de cette demande par le terminal. Elle correspond donc à un instant de renvoi modifié par rapport à l'instant Tp prédéterminé.

Il est à noter que par défaut, lorsqu'un terminal ne répond pas à un appel entrant au bout d'une durée prédéterminée, le réseau de communication RES transfère l'appel entrant sur la messagerie vocale de l'utilisateur du terminal. Dans ce mode de réalisation de l'invention, on suppose que cette durée prédéterminée est configurée à une minute sur les plates-formes de service du réseau de communication RES. Ainsi une modification de l'instant de renvoi prédéterminé Tp par l'utilisateur du terminal T2, a pour effet de renvoyer l'appel entrant sur la messagerie vocale de l'utilisateur à l'instant de renvoi modifié en résultant, dès que cet instant de renvoi modifié correspond à une durée de temporisation inférieure à une minute.

Il est de plus à noter que dans ce mode de réalisation de l'invention, les moyens d'envoi d'un message de refus dans le terminal T2 correspondent à des moyens d'envoi d'un message "SIP Bye".

Dans d'autres modes de réalisation de l'invention, la nature de ce message de refus diffère en fonction du protocole de communication utilisé par le terminal pour communiquer avec le réseau de communication auquel il est connecté. Par exemple, si en variante de réalisation le terminal T2 est un terminal GSM (d'après l'anglais "Global System for Mobile Communications") et le réseau RES un réseau mobile, ce message de refus est un message "CM (d'après l'anglais "Connection Management") DISCONNECT". Il est à noter qu'il est également possible de notifier le réseau de communication et plus précisément le serveur d'application AS par un autre canal de contrôle que celui utilisé pour établir la communication entrante. Par exemple en variante de réalisation, le message de refus envoyé par le terminal T2 au réseau de communication RES est une requête http (d'après l'anglais "Hyper Text Transfer Protocol") sur une connexion Internet avec le serveur d'application AS.

Suite à l'étape E1 de notification de l'appel entrant à l'utilisateur du terminal T2, l'étape E2 du procédé de notification selon l'invention est la réception, par le terminal T2, d'une donnée destinée à modifier l'instant Tp prédéterminé de renvoi de l'appel entrant vers le serveur de messagerie vocale SM. Cette donnée correspond à la durée à déduire ou à ajouter à la durée de temporisation correspondant à l'instant Tp de renvoi prédéterminé, suite à un déplacement du curseur sur l'interface graphique présentée par le terminal T2 à l'utilisateur à l'étape E1. La réception de cette donnée donne lieu, dans le terminal T2 lors de cette étape E1, au calcul d'une nouvelle durée de temporisation correspondant au déplacement du curseur. Il est à noter que l'interface graphique du terminal T2 est développée de manière à ce que le curseur ne puisse être déplacé vers une position correspondant à une durée de temporisation, par rapport à la réception de l'appel entrant, qui serait déjà écoulée.

L'étape suivante E3 est la temporisation de l'envoi d'un message de refus de l'appel entrant par le terminal T2 au réseau de communication RES, jusqu'à l'expiration de la nouvelle durée de temporisation calculée à l'étape précédente E1.

Enfin l'étape E4 est l'émission, par le terminal T2, d'un message de refus de l'appel entrant, ou plus précisément de la demande d'établissement d'appel entrant, dans le réseau de communication RES. Ce message est un message "SIP Bye".

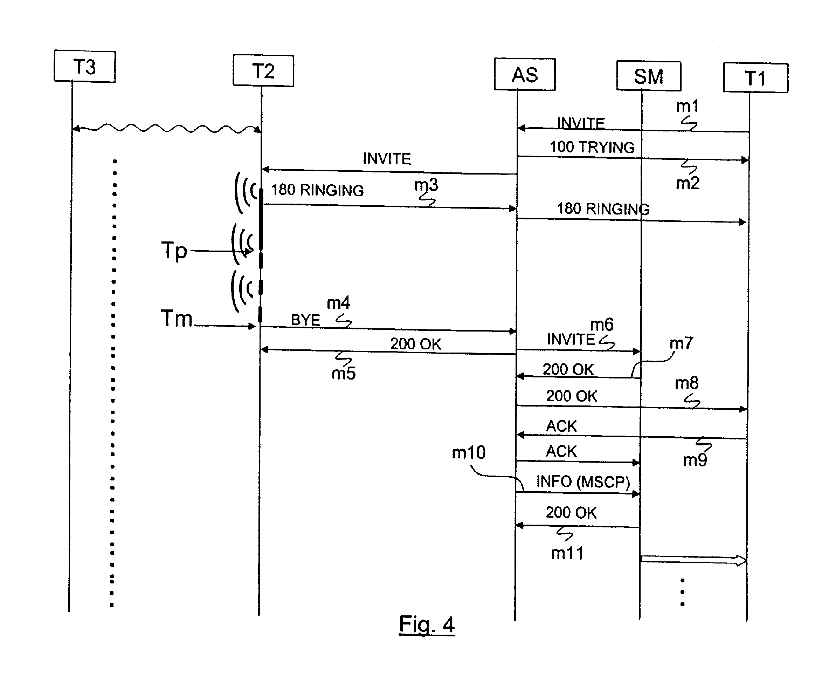

La **figure 4** illustre un cas d'utilisation de l'invention lorsque l'utilisateur du terminal T2 est déjà en communication avec l'utilisateur d'un terminal T3, c'est-à-dire qu'il est dans un premier appel, et qu'il reçoit un deuxième appel, entrant. On suppose, dans ce cas d'usage, que l'utilisateur souhaite différer le renvoi du deuxième appel en provenance du téléphone T1 sur sa messagerie vocale distante, par exemple parce qu'il souhaite prendre ce deuxième appel mais pas immédiatement, sans mettre le premier appel en attente.

Les messages m1 à m3 décrivent la demande d'établissement du deuxième appel entrant en provenance du téléphone T1:

Le message m1 envoyé par le téléphone T1 au serveur d'application AS, est un message "SIP Invite" comportant des paramètres de session SDP (d'après l'anglais "Session Description Protocol") correspondant au téléphone T1. Ce message m1 correspond à une demande d'établissement d'appel.

A la réception du message m1, le serveur d'application AS envoie un message m2 "SIP Trying" au téléphone T1, et relaie le message m1 au terminal T2. De plus, le serveur d'application AS arme une temporisation correspondant à une durée prédéterminée d'une minute, au bout de laquelle, sans réponse du terminal T2, la demande d'établissement d'appel du téléphone T1 est renvoyée vers le serveur SM de messagerie vocale.

A la réception du message m1 "SIP Invite", le terminal T2 notifie l'utilisateur du terminal T2 de ce double appel par un bip sonore et affiche l'interface graphique représentée à la **figure 3****.** Il envoie en parallèle un message m3 "SIP 180 Ringing" au serveur d'application AS, pour lui indiquer qu'il est en train d'alerter l'utilisateur du terminal T2. Le serveur d'application AS relaie aussitôt ce message m3 au téléphone T1.

Il est à noter qu'à des fins de clarté, tous les équipements impliqués dans cette demande d'établissement d'appel ne sont pas représentés ni décrits en détail dans ce cas d'utilisation de l'invention. Notamment les proxys SIP tels que les CSCF (d'après l'anglais "Call Session Control Function") de l'architecture IMS ne sont pas décrits.

L'utilisateur du terminal T2 étant notifié du deuxième appel en provenance du téléphone T1, on suppose, dans cet exemple d'utilisation de l'invention, que l'utilisateur du terminal T2 déplace le curseur sur l'interface graphique présentée sur l'écran E, jusqu'à une position correspondant à un instant modifié Tm de renvoi sur messagerie vocale de ce deuxième appel.

Le terminal T2 envoie ensuite, à l'instant Tm, un message m4 "SIP Bye" au serveur d'application AS, qui répond à ce message m4 par un message m5 "SIP 200 OK", au terminal T2.

Il est à noter que le message m4 est reçu par le serveur d'application AS avant l'expiration de la durée de une minute armée dans un temporisateur par le serveur d'application AS à la réception du message m1. En effet le curseur de l'interface graphique présenté à l'utilisateur du terminal T2 est développé de telle manière qu'il ne lui permet pas d'excéder cette durée de temporisation d'une minute.

En parallèle à l'envoi du message m5, le serveur d'application AS envoie un message m6 "SIP Invite" au serveur SM de messagerie, comportant les paramètres SDP reçus dans le message m1. Le serveur SM de messagerie répond au serveur d'application AS par un message m7 "SIP 200 OK" comportant ses propres paramètres de session. Le serveur d'application AS transmet ces paramètres au téléphone T1 dans un message m8 "SIP 200 OK". A la réception du message m8, le téléphone T1 envoie un message m9 "SIP ACK" d'acquittement au serveur d'application AS, qui relaie ce message au serveur de messagerie SM. Enfin le serveur d'application AS envoie au serveur de messagerie vocale SM, un message m10 "SIP INFO" comportant une requête MSCP (d'après l'anglais "Media Server Control Protocol "), indiquant par un identifiant de ressource quel message vocal jouer au téléphone T1. Le serveur de messagerie SM répond positivement au message m10 par un message m11 "SIP 200 OK", et joue au téléphone T1 un message vocal correspondant à l'identifiant de ressource reçu dans le message m10.

De préférence, ce message vocal est différent de celui joué par le serveur de messagerie par défaut à l'expiration de la temporisation d'une minute armée par le serveur d'application AS. Pour cela, le serveur d'application AS insère un identifiant de ressource différent dans le cas où cette temporisation a expiré par rapport au cas où cette temporisation n'a pas expiré, dans le message m10 "SIP INFO". Cela permet à l'utilisateur du téléphone T1 de distinguer, lorsqu'il est renvoyé sur la messagerie vocale de l'utilisateur du terminal T2, entre le cas où l'appelé est indisponible car absent du cas où l'appelé est présent mais momentanément indisponible.

## Revendications

1. Procédé de notification d'une demande d'établissement d'appel entrant sur un terminal (T2), ledit procédé étant implémenté sur ledit terminal (T2) et comportant une étape (E1) de notification de ladite demande, **caractérisé en ce qu'**il comporte en outre:
- une étape (E2) de réception, à partir d'une interface utilisateur dudit terminal, d'une donnée destinée à modifier un instant prédéterminé (Tp) de renvoi dudit appel entrant vers un serveur (SM),
- et une étape (E3) de temporisation, en fonction de ladite donnée, d'une étape (E4) d'émission d'un message (m4) de refus de ladite demande.

2. Procédé de notification selon la revendication 1, **caractérisé en ce que** ladite donnée correspond:
- à un nombre de sonneries additionnelles par rapport à un nombre prédéterminé de sonneries,
- ou à une durée de temporisation en secondes par rapport à une durée prédéterminée.

3. Procédé de notification selon la revendication 1 ou 2, **caractérisé en ce que** ledit message (m4) de refus déclenche la diffusion d'un message vocal différent d'un message vocal diffusé par défaut lorsque ledit procédé de notification n'est pas utilisé.

4. Terminal (T2) téléphonique comportant des moyens de notification d'une demande d'établissement d'appel entrant, **caractérisé en ce qu'**il comporte en outre:
- des moyens de réception, à partir d'une interface utilisateur dudit terminal, d'une donnée destinée à modifier un instant prédéterminé (Tp) de renvoi dudit appel entrant vers un serveur (SM),
- et des moyens de temporisation d'une émission d'un message (m4) de refus de ladite demande en fonction de ladite donnée reçue par lesdits moyens de réception.

5. Programme d'ordinateur comportant des instructions pour mettre en oeuvre le procédé selon l'une quelconque des revendications 1 à 3, lorsqu'il est exécuté sur un processeur.

## Claims

1. Method of notification of a request for incoming call setup on a terminal (T2), the said method being implemented on the said terminal (T2) and comprising a step (E1) of notification of the said request, **characterized in that** it furthermore comprises:
- a step (E2) of receiving, from a user interface of said terminal, a datum intended to modify a predetermined instant (Tp) of diversion of the said incoming call to a server (SM),
- and a step (E3) of timeout, as a function of the said datum, of a step (E4) of sending a message (m4) of denial of the said request.

2. Method of notification according to Claim 1, **characterized in that** the said datum corresponds:
- to a number of additional rings with respect to a predetermined number of rings,
- or to a duration of timeout in seconds with respect to a predetermined duration.

3. Method of notification according to Claim 1 or 2, **characterized in that** the said denial message (m4) triggers the broadcasting of a different voice message from a voice message broadcast by default when the said method of notification is not used.

4. Telephone terminal (T2) comprising means for notification of a request for incoming call setup, **characterized in that** it furthermore comprises:
- means for receiving, from a user interface of said terminal, a datum intended to modify a predetermined instant (Tp) of diversion of the said incoming call to a server (SM),
- and means for timeout of a sending of a message (m4) of denial of the said request as a function of the said datum received by the said reception means.

5. Computer program comprising instructions for implementing the method according to any one of Claims 1 to 3, when it is executed on a processor.

## Patentansprüche

1. Verfahren zum Melden einer Anrufaufbauanforderung, die bei einem Endgerät (T2) ankommt, wobei das Verfahren in dem Endgerät (T2) implementiert ist und einen Schritt (E1) des Meldens der Anforderung umfasst, **dadurch gekennzeichnet, dass** es außerdem Folgendes umfasst:
- einen Schritt (E2), um von einer Anwenderschnittstelle des Endgeräts Daten zu empfangen, die dazu bestimmt sind, einen vorgegebenen Zeitpunkt (Tp) zum Umleiten des ankommenden Anrufs zu einem Server (SM) zu modifizieren,
- und einen Schritt (E3), um als Funktion der Daten einen Schritt (E4) zum Senden einer Nachricht (m4) zum Ablehnen der Anforderung zu verzögern.

2. Meldeverfahren nach Anspruch 1, **dadurch gekennzeichnet, dass** die Daten Folgendem entsprechen:
- einer Anzahl zusätzlicher Klingeltöne in Bezug auf eine vorgegebene Anzahl von Klingeltönen,
- oder einer Verzögerungsdauer in Sekunden in Bezug auf eine vorgegebene Dauer.

3. Meldeverfahren nach Anspruch 1 oder 2, **dadurch gekennzeichnet, dass** die Ablehnungsnachricht (m4) das Ausgeben einer Ansage auslöst, die von einer Ansage verschieden ist, die standardmäßig ausgegeben wird, wenn das Meldeverfahren nicht verwendet wird.

4. Telephonendgerät (T2), das Mittel zum Melden einer Anrufaufbauanforderung umfasst, **dadurch gekennzeichnet, dass** es außerdem Folgendes umfasst:
- Mittel, um von einer Anwenderschnittstelle des Endgeräts Daten zu empfangen, die dazu bestimmt sind, einen vorgegebenen Zeitpunkt (Tp) zum Umleiten des ankommenden Anrufs zu einem Server (SM) zu modifizieren, und
- Mittel, um ein Senden einer Nachricht (m4) zum Ablehnen der Anforderung als Funktion der Daten, die von den Empfangsmitteln empfangen werden, zu verzögern.

5. Computerprogramm, das Befehle enthält, um das Verfahren nach einem der Ansprüche 1 bis 3 auszuführen, wenn es in einem Prozessor ausgeführt wird.
